# EUROPÄISCHE PATENTSCHRIFT

(11) **EP 1 759 572 B1**
(45) Veröffentlichungstag und Bekanntmachung des Hinweises auf die Patenterteilung: **11.02.2009**
(21) Anmeldenummer: 06007680.9
(22) Anmeldetag: 12.04.2006
(51) Int. Cl.: A01D 34/86

(54) **Mäh- und/oder Schneidgerät**
Mowing and/or cutting device
Appareil à faucher et/ou couper

(30) Priorität: 22.04.2005 DE 202005006541 U; 22.04.2005 DE 102005018987; 22.04.2005 DE 202005006539 U; 22.04.2005 DE 202005006542 U; 22.04.2005 DE 202005006540 U
(43) Veröffentlichungstag der Anmeldung: 07.03.2007
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(56) Entgegenhaltungen:
- EP-A- 1 159 866
- DE-A1- 3 218 525
- US-A- 6 047 531

## Beschreibung

Die Erfindung betrifft ein Mäh- und/oder Schneidgerät mit einem an einem Fahrzeug halterbaren und gegenüber diesem beweglichen Ausleger zum Tragen eines Arbeitskopfes nach dem Oberbegriff des Anspruchs 1 (siehe z.B. EP-A-1 159 866).

Es sind derartige Geräte bekannt, bei denen ein Ausleger nach hinten über eine Fahrerkabine greifend ablegbar ist, so daß ein von dem Ausleger gehaltener Arbeitskopf auf einer Halterung der Ladefläche abstützbar ist. Damit ist die Nutzbarkeit der Ladefläche für andere Zwecke räumlich eingeschränkt, bei einer voll belasteten Ladefläche kann sich zudem eine ungünstige Gewichtsverteilung durch den dort auch noch abgelegten Arbeitskopf ergeben.

Der Erfindung liegt das Problem zugrunde, hier eine Verbesserung zu erreichen.

Die Erfindung löst dieses Problem durch ein Mäh- und/oder Schneidgerät mit den Merkmalen des Anspruchs 1. Hinsichtlich vorteilhafter Ausgestaltungen wird auf die abhängigen Ansprüche 2 bis 16 verwiesen.

Mit der Erfindung sind zumindest zwei unterschiedliche Transportstellungen eines Auslegers möglich, so daß je nach Einsatz entschieden werden kann, ob dieser Ausleger längs oder quer zum Fahrzeug gehalten werden soll. Beispielsweise kann so die Ladefläche für den Winterdienst mit einem hoch aufbauenden und schweren Streugutbehälter mit Ausbringvorrichtung versehen werden und dann der Ausleger mit dem Arbeitskopf vorne vor dem Fahrzeug quer gehalten werden, wohingegen der Ausleger nach Abbau des Streugutbehälters dann das Fahrerhaus übergreifend nach hinten abgelegt werden kann. Vorzugsweise läßt sich von der Fahrerkabine aus ohne irgendeinen Umbau wählen, welche Transportstellung gerade eingestellt werden soll.

Wenn der Ausleger an einer frontseitigen Trägereinrichtung quer zum Fahrzeug beweglich gehalten und für eine nach hinten greifende Stellung daran gegenüber einer vertikalen Fahrzeuglängsebene seitlich versetzt halterbar ist, kann dies eine erhebliche Verbesserung des Sichtfelds des Fahrers bewirken. Der Ausleger kann dann zum Beispiel weit nach rechts verfahren werden, um einem links sitzenden Fahrer einen großen Sichtbereich zu ermöglichen.

Besonders günstig kann der Ausleger aus der nach hinten greifenden Stellung heraus in gleichartiger Weise zu beiden Seiten hin nach vorne schwenkbar sein. Dies ermöglicht einen Einsatz des Arbeitskopfes auf beiden Fahrzeugseiten, ohne daß zwischendrin ein Umstecken eines Bolzens, ein Ab- oder Umbau oder ähnliche Maßnahmen erforderlich wären.

Dabei kann besonders vorteilhaft durch eine Antriebseinheit mit zwei unterschiedlichen Kraftangriffsrichtungen sichergestellt sein, daß dann, wenn eine Krafteinleitung in die Nähe einer Totpunktlagc gelangt, eine andere Krafteinleitung in einer effektiv arbeitenden Stellung mit großem Hebelarm stehen kann. Dadurch entsteht zu jedem Zeitpunkt ein großes Drehmoment, der Verschwenkbereich ist deutlich vergrößert, da auch über einen Winkel von 180° hinaus geschwenkt werden kann, was mit einem einzelnen Zylinder ohne Überschreiten einer Totpunktlage nicht möglich wäre.

Insbesondere können für die Krafteinleitung aus unterschiedlichen Richtungen zumindest zwei auf den Ausleger einwirkbare Hydraulikzylinder vorgesehen sind, was mit einem geringen Steuerungsaufwand zu realisieren ist und günstige Angriffswinkel für die Krafteinleitungen ermöglicht.

Sehr günstig sind die Krafteinwirkungsrichtungen axialsymmetrisch zu einer die vertikale Schwenkachse des Auslegers schneidenden Fahrzeuglängsebene angeordnet, wodurch sich für beide Schwenkrichtungen des Auslegers aus dieser Lage heraus gleiche Bedingungen ergeben.

Sofern der Bewegungswinkel aus der nach hinten weisenden Stellung heraus mindestens 90° zu jeder Seite beträgt, kann der Ausleger auch querab vom Fahrzeug seitlich ausgreifen. Bei einem Winkel von etwa 110° ist auch ein Schrägverschwenken mit einer zum Beispiel nach vorne vor das Fahrzeug weisenden Komponente möglich. Der Fahrer kann dabei den Arbeitskopf besonders gut im Blick halten.

Weiterhin ist es günstig, wenn die Schwenkbewegung um die vertikale Schwenkachse des Auslegers frei von äußeren Anschlägen ausführbar ist. Diese können dann gespart werden. Ein entsprechender Verschleiß durch Kontakt mit Anschlägen entfällt.

Insbesondere ist es zur Vermeidung einer Totpunktlage vorteilhaft, wenn in der heckwärts weisenden Längsstellung die Wirklinicn entlang der Längserstreckung der Hydraulikzylinder fahrzeugseitig an der Auslenkungsachse vorbeilaufen.

Eine besonders hinsichtlich der Ansteuerung günstige Anordnung mit einer großen Längenspreizung zwischen voll ausgefahrenem und voll eingefahrenem Antrieb ist erreicht, wenn die Hydraulikzylinder jeweils einen äußeren Zylinder umfassen, dessen Kolbenstange nach Art eines Teleskops einen inneren Zylinder mit einer ausfahrbaren und an der Anlenkungsachse an dem Hebel der Auslenkungsachse angreifenden inneren Kolbenstange ausbildet.

Bei in heckwärts weisender Längsstellung des Auslegers können sowohl die Kolbenstange des äußeren als auch die Kolbenstange des inneren Zylinders eingefahren sein, so daß die Antriebseinheit sehr kompakt und raumsparend hinter der eigentlichen vertikalen Schwenkachse des Auslegers angeordnet sein kann.

Sofern der Ausleger, von einem fahrzeugseitigen Träger ausgehend, zumindest einen ersten, in einer Arbeitsstellung hoch aufragbaren Abschnitt, einen daran anschließenden quer ausgreifbaren zweiten Abschnitt und zumindest einen dritten, abwärts in Richtung Arbeitskopf erstreckbaren Abschnitt umfaßt, ist es ermöglicht, auch breite Hindernisse zu übergreifen, wobei der quer ausgreifende Abschnitt in dieser übergreifenden Stellung oberhalb des Hindernisses geführt ist. Der Ausleger formt dabei ein Portal aus, dessen oberer Rahmenteil im wesentlichen quer verläuft und damit eine erhebliche Breite überbrücken kann.

Besonders günstig ist der dritte Abschnitt längenvariabel, um auch bei einer hohen Stellung des ein Hindernis übergreifenden Abschnitts noch bis zum Boden reichen zu können.

Der zweite, an den ersten angelenkte Abschnitt kann eine Längenerstxeckung von mindestens 90 Zentimetern, häufig deutlich über 1,20 Meter aufweisen, wodurch auch das Übergreifen von breiten Richtungs- und Ortshinweisschildern möglich wird.

Auch ein Übergreifen eines Führerhauses des Fahrzeuges ist mit dem erfindungsgemäßen Ausbildung unproblematisch möglich, wobei durch den aufragenden ersten Abschnitt dieser auch dicht vor einer steil stehenden Windschutzscheibe stehen kann und anders als im Stand der Technik keinen großen Abstand von dieser in Fahrzeuglängsrichtung benötigt.

Der Ausleger kann in einer Quertransportstellung dennoch sehr raumsparend einfaltbar sein, indem dann der erste Abschnitt quer zum Fahrzeug, der zweite Abschnitt zumindest nahezu vertikal abwärts und der dritte Abschnitt schräg aufwärts oder nahezu horizontal mit einer dem ersten Abschnitt entgegengesetzten Querkomponente verläuft. Der Arbeitskopf kann insbesondere, um einem zweiten Ausleger mit zweitem Arbeitskopf Raum zu belassen, dann auch senkrecht stehen.

Vorteilhaft ist in der Längstransportstellung eine Längen- und/oder Winkeleinstellung des dritten Abschnitts an die Geometrie der jeweiligen Ladefläche anpaßbar, so daß diese unterschiedlich lang oder hoch sein kann.

Ein großer Vorteil der Erfindung ist auch, daß trotz der unterschiedlichen Transportstellungen eines Auslegers auch ein zweiter Ausleger mit zumindest einem weiteren Arbeitskopf vorgesehen sein kann, etwa für ein seitlich versetztes Mähen von Grasstreifen vor und hinter Leitpfosten. Auch bei Montage des zweiten Auslegers kann mit der raumsparenden Quertransportstellung auch der erste Ausleger nach wie vor beide Transportstellungen einnehmen, wobei er in seiner quer abgelegten Transportstellung raumsparend zumindest bereichsweise den zweiten Ausleger übergreifen kann. Der zweite Ausleger kann hierzu eine Auflagefläche für den ersten bilden.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Ansicht von vorne eines erfindungsgemäßen Mäh- und/oder Schneidgeräts mit einer frontseitig an einem Fahrzeug angeordneten Mähvorrichtung in Arbeitsstellung mit ein Hindernis übergreifendem Ausleger,
- Fig. 2: eine ähnliche Ansicht wie Fig. 1 mit in einer Quertransportstellung befindlichem Ausleger,
- Fig. 3: das Mäh- und/oder Schneidgerät nach Fig. 1 in Seitenansicht mit in einer Längstransportstellung befindlichem Ausleger,
- Fig. 4: eine ähnliche Ansicht wie Fig. 3 mit einer erhöhten und weiter vorne gelegenen Ablage auf der Ladefläche für den. Arbeitskopf.
- Fig. 5: eine perspektivische Einzelteildarstellung des fahrzeugseitigen Trägers mit zwei übereinander liegenden Führungsschienen und daran abgestützter Halterung für die Querverlagerung des Auslegers,
- Fig. 6: eine schematische Draufsicht auf die Halterung mit der Antriebseinheit in maximal nach rechts vorne ausgeschwenkter Stellung des nach hinten ablegbaren Auslegers,
- Fig. 7: eine ähnliche Ansicht wie Fig. 6 mit ungefähr quer zum Fahrzeug nach rechts ausgeschwenkter Stellung des Auslegers, etwa entsprechend der Auslegerstellung nach Fig. 1,
- Fig. 8: eine ähnliche Ansicht wie Fig. 7 mit längs zum Fahrzeug nach hinten weisender Stellung des Auslegers, etwa entsprechend seiner Stellung in Fig. 3,
- Fig. 9: eine ähnliche Ansicht wie Fig. 5 des frontseitigen Trägers, jedoch in einer Bestückung mit zwei hier in Arbeitsstellung befindlichen Auslegern,
- Fig, 10: den Träger mit Auslegern nach Fig. 9 in Ansicht von oben,
- Fig. 11: eine ähnliche Ansicht wie Fig. 9 des mit zwei Auslegern bestückten Trägers, jedoch in quer vor dem Fahrzeug gehaltener Transportstellung beider Ausleger,
- Fig. 12: den Träger mit zwei Auslegern in Transportstellung nach Fig. 11 in Ansicht von oben,
- Fig. 13: den Träger mit zwei Auslegern in Transportstellung nach Fig. 11 in perspektivischer Ansicht von schräg rechts vorne.

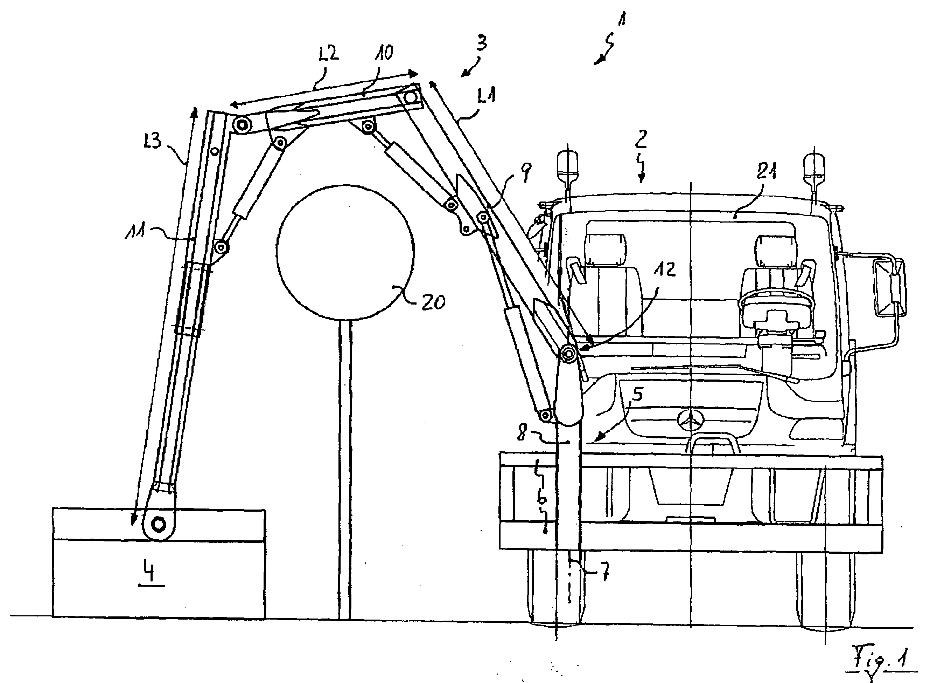

Das in Figur 1 dargestellte und insgesamt mit 1 bezeichnete Mäh- und/oder Schncidgerät umfaßt ein hier selbstfahrendes Fahrzeug 2, was nicht zwingend ist, zumindest einen hier mehrteiligen Ausleger 3 mit zumindest einen Arbeitskopf 4, der beispielsweise als Mäh-, Schneid- oder Fräskopf oder als Räum- oder Reinigungskopf ausgebildet sein kann. Er kann mit Schneid- und/oder Schlagmitteln versehen sein. Neben Grasmähköpfen mit einer oder mehreren vertikal oder horizontal rotierenden Schneid- oder Schlagwalzen ist so beispielsweise auch eine reine Heckenschere oder dergleichen montierbar. Neben der hier gezeigten Frontmontage des Auslegers 3 kommt zusätzlich auch eine Montage auf der Ladefläche oder eine Heckmontage eines Auslegers in Betracht.

Der Ausleger 3 ist an einem Träger 5 montiert, der eine Querführungseinrichtung 6 mit zum Beispiel zwei Horizontalprofilen und eine daran quer zum Fahrzeug 2 verschiebliche und aufragende Halterung 8 mit einer aufragenden und im folgenden als vertikal bezeichneten Schwenkachse 7 umfaßt, um die herum der Ausleger 3 schwenkbar ist. Da diese Halterung 8 selbst gegenüber der Querführungseinrichtung 6 nicht seitlich ausgreift, wird sie hier nicht als erster Abschnitt des Auslegers bezeichnet.

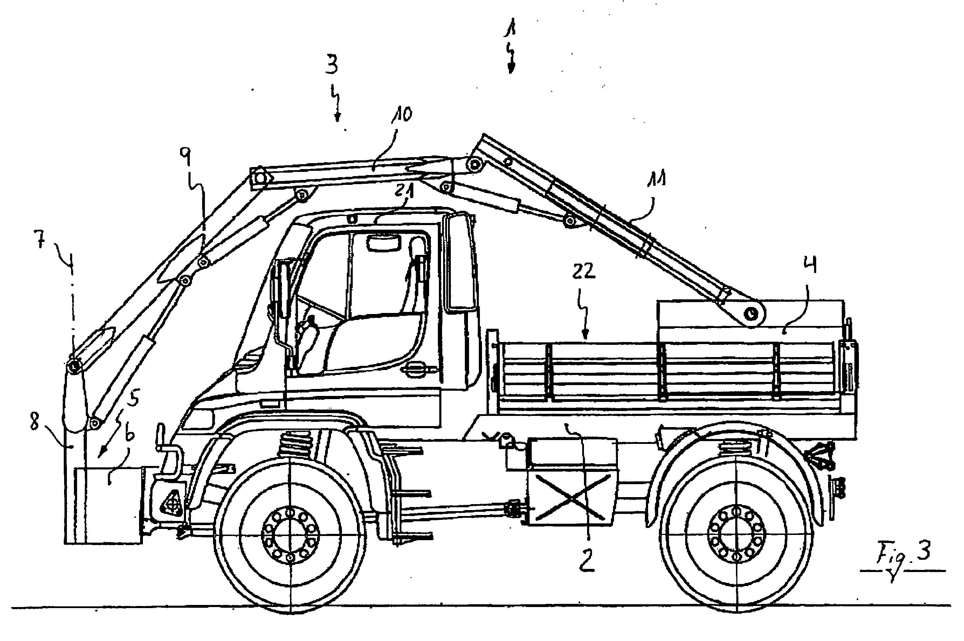

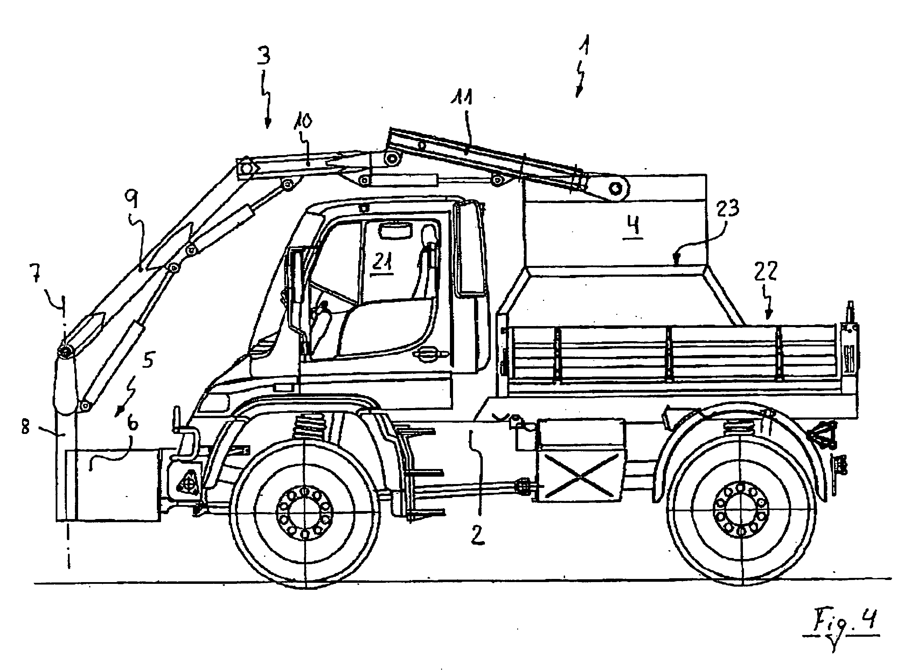

Da der Ausleger an der frontseitigen Trägereinrichtung 5 quer zum Fahrzeug 2 beweglich gehalten ist, ist er für eine unten noch näher beschriebene Längstransportstellung gemäß den Figuren 3 und 4 gegenüber einer vertikalen Fahrzeuglängsebene seitlich versetzt halterbar, so daß er auch dann nicht zwingend in einer vertikalen Fahrzeuglängsmittelebene stehen muß, sondern zum Beispiel vor die Beifahrerseite quer verschoben sein kann.

Das Fahrzeug 2 kann als Schmalspurtraktor ausgebildet sein, um damit einen flexiblen Einsatz auch in engen Bereichen zu ermöglichen. Auch größere, LKW-ähnliche Fahrzeuge sind möglich.

Der nach hinten ablegbare Ausleger 3 umfaßt im gezeichneten Ausführungsbeispiel zumindest einen ersten, in einer Arbeitsstellung (Fig. 1) hoch aufragbaren Abschnitt 9, einen daran anschließenden quer ausgreifbaren zweiten Abschnitt 10 und einen dritten, abwärts in Richtung Arbeitskopf 4 erstreckbaren Abschnitt 11. Alle Abschnitte 9, 10, 11 sind gelenkig und über Antriebe einzeln gegeneinander schwenkbeweglich miteinander verbunden. Am dritten Abschnitt 11 ist direkt oder unter Zwischenschaltung weiterer Abschnitte der Arbeitskopf 4 schwenkbeweglich um eine Achse 26 angehängt.

Der von dem Träger 5 aufragbare erste Abschnitt 9 des Auslegers 3 ist hier wie auch der zweite Abschnitt 10 als starres Profil ausgebildet, könnte jedoch auch längenvariabel sein. Zumindest in einer Arbeitsstellung kann der erste Abschnitt eine Länge L1 von zumindest etwa 1,80 Meter aufweisen, um auch hohe Hindernisse von 2,50 bis 3,0 Metern Höhe übergreifen zu können. Im gezeichneten Ausführungsbeispiel beträgt die Länge L1 des ersten Abschnitts 9 etwa zwei Meter.

Der zweite Abschnitt 10 des Auslegers 3 kann hingegen zumindest in dieser Arbeitsstellung deutlich kürzer sein. Er hat insbesondere eine - ggf. variable - Länge L2 zwischen 0,70 und 1,60 Meter. In der in Fig. 1 gezeigten Arbeitsstellung formt dieser Abschnitt 10 den oberen Rahmenteil eines von dem Ausleger gebildeten Portals und übergrcift das Hindernis 20 im wesentlichen horizontal oder nur gering geneigt liegend. Dadurch ergibt sich eine optimierte lichte Weite unterhalb des Portals, die nahezu die gesamte Länge L2 des Abschnitts 10 umfassen kann. Es kann auch andere Arbeitsstellungen geben, in denen ein beispielsweise längenvariabler zweiter Abschnitt die Länge des ersten Abschnitts 9 auch überragen könnte. In jedem Fall gibt es aber eine Stellung, in der der Abschnitt 10 kürzer als der erste Abschnitt 9 ist, um somit ein Plazieren des Arbeitskopfes 4 dicht neben dem übergriffenen Hindernis 20 zu ermöglichen.

Der dritte Abschnitt 11 ist hier nach Art eines Teleskops längenvariabel, seine Länge L3 kann erheblich über zwei Metern liegen.

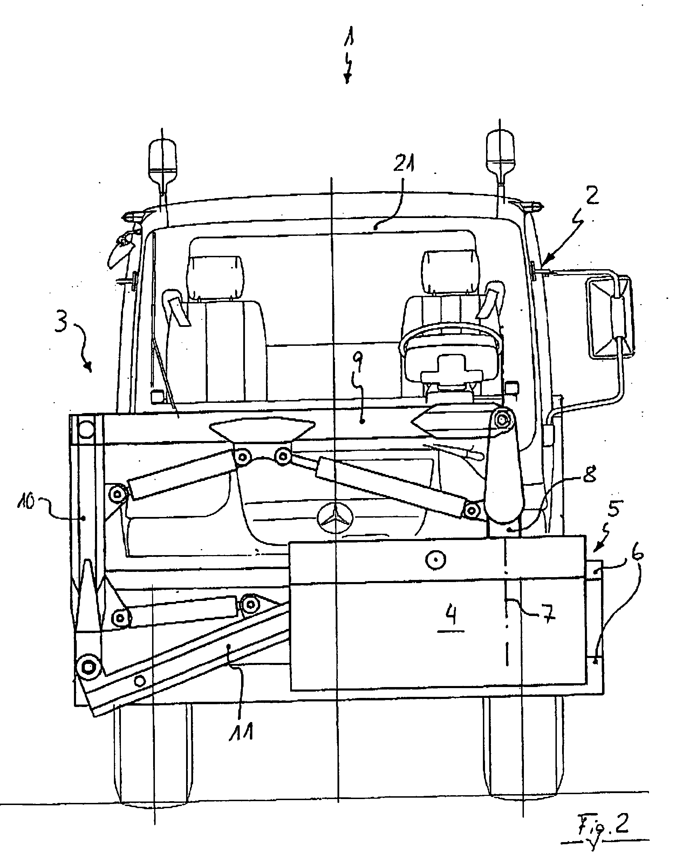

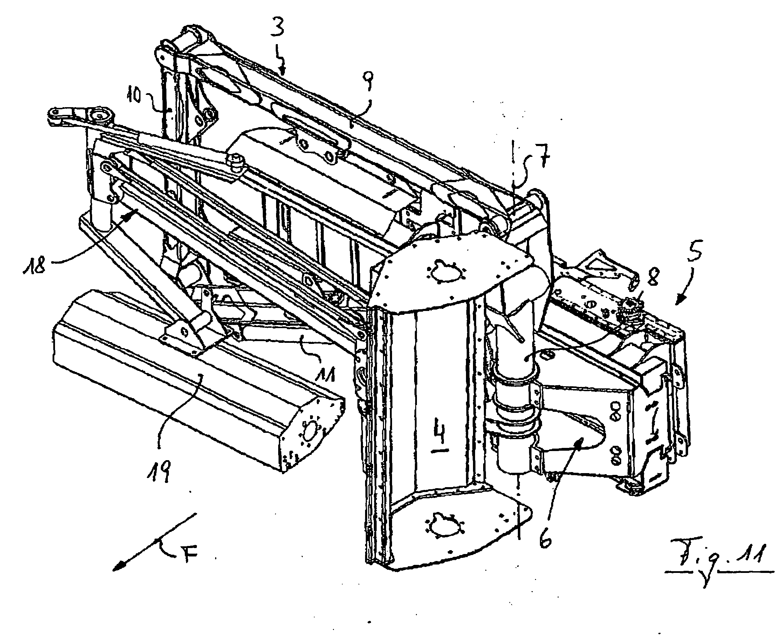

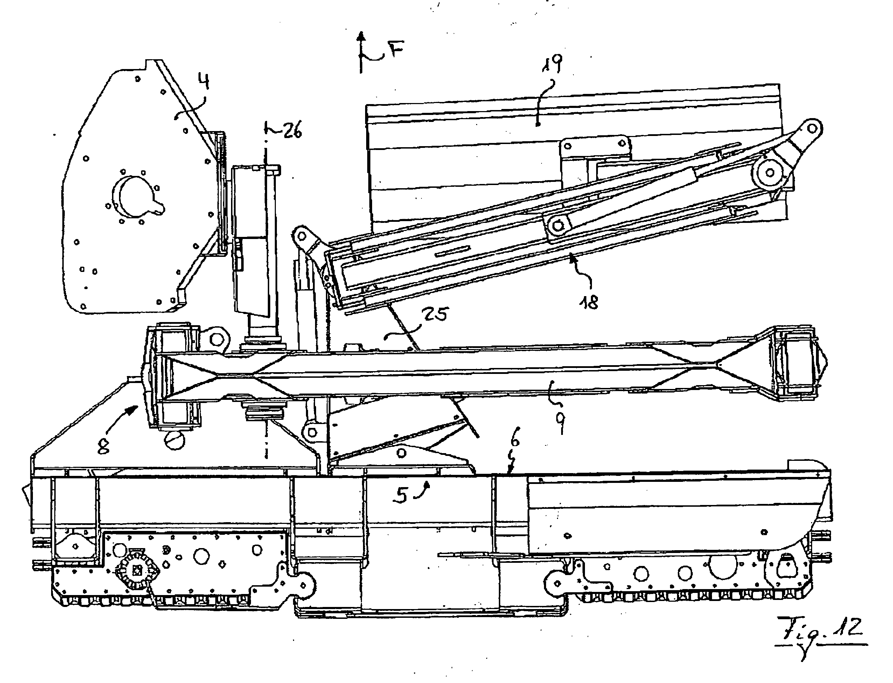

In der in Figur 2 gezeigten Quertransportstellung ist der Ausleger 3 quer vor (oder hinter) dem Fahrzeug 2 derart halterbar, daß der erste Abschnitt 9 als oberster Teil des Auslegers 3 etwa an der Unterkante einer Windschutzscheibe quer zum Fahrzeug 2 liegt, der zweite Abschnitt 10 zumindest nahezu vertikal abwärts weist, was aufgrund seiner geringen Länge möglich ist, und der dritte Abschnitt 11 in cingefahrener Stellung schräg aufwärts mit einer dem ersten Abschnitt entgegengesetzten Querkomponente verläuft, Das Packmaß ist daher minimiert, die Breite gering. Der Mähkopf 4 kann so horizontal und weit unten gehalten werden, dem Fahrer bleibt dadurch ein optimiertes Sichtfeld. Auch eine vertikale Halterung des Mähkopfes 4 ist möglich und ist weiter unten in den Figuren 11 bis 13 gezeigt.

Zusätzlich zu der Quertransportstellung ist auch noch zumindest eine in den Figuren 3 und 4 dargestellte Längstransportstellung ohne irgendeinen Umbau ermöglicht, in der der Ausleger 3 bei frontseitigem Anbau längs zum Fahrzeug halterbar ist, wobei der erste Abschnitt 9 so weit aufgestellt ist, daß seine Anlenkung zum zweiten Abschnitt 10 das Führerhaus 21 überragt, der zweite Abschnitt annähernd horizontal oberhalb des Führerhauses 21 gelegen ist und der dritte Abschnitt 11 sich leicht abwärts in Richtung einer Ladefläche 22 erstreckt, wo eine - in der Darstellung nach Fig. 4 erhöhte - Ablage 23 für den Arbeitskopf 4 vorgesehen sein kann. Dadurch, daß der erste Abschnitt 9 dabei steil aufragen kann und zur Überbrückung zu dem den Arbeitskopf tragenden letzen Abschnitt 11 ein Zwischenabschnitt 10 vorgesehen ist, kann die Windschutzscheibe steil stehen, ohne daß eine Kollisionsgefahr mit dem Ausleger 3 entsteht. Dennoch muß die Halterung 8 für den Ausleger nicht weit vor der Windschutzscheibe plaziert werden, um diese Kollisionsfreiheit zu ermöglichen. Auch die Fahrzeuglänge kann daher gering bleiben.

In dieser Längstransportstellung ist eine Längen- und/oder Winkeleinstellung des dritten Abschnitts 11 an die Geometrie der jeweiligen Ladefläche 22 anpaßbar, so daß auch die Höhe der Ablage 23 und deren Längsausrichtung unterschiedlich sein kann. In Fig. 3 ist der dritte Abschnitt 11 des Auslegers teilweise ausgefahren, so daß der Arbeitskopf hier im Heckbereich der Ladefläche 22 liegt, in Fig. 4 ist für eine weiter vorne und oben gelegene Stellung des Arbeitskopfes 4 der dritte Abschnitt 1 eingefahren. An die Fahrzeuggeometrie sind daher keine besonderen Anforderungen zu stellen. Es können auch verschiedene bestehende Fahrzeuge 2 nachträglich mit einem Ausleger 3, der wahlweise zumindest in einer ersten Transportstellung quer vor dem Fahrzeug und in einer zweiten Transportstellung längs nach hinten hinter ein Führerhaus 21 des Fahrzeugs 2 greifend ablegbar ist, nachgerüstet werden.

Für das Verschwenken des Auslegers 3 um die Achse 7 ist eine mit dem Ausleger 3 quer zum Fahrzeug 2 bewegliche hydraulische Antriebseinheit 12 vorgesehen, die hier zwei Hydraulikzylindereinheiten 13, 14 umfaßt, die im folgenden trotz ihres komplizierteren Aufbaus (s.u.) insgesamt als Hydraulikzylinder bezeichnet werden. Sie sind horizontal und damit senkrecht zur Schwenkachse 7 des Auslegers gelegen. In nach hinten weisender Nullstellung des Auslegers 3 (Fig. 3, Fig. 4, Fig. 8) sind die Hydraulikzylinder 13, 14 symmetrisch zueinander und symmetrisch zu einer die Schwenkachse 7 schneidenden Fahrzeuglängsebene 24 angeordnet.

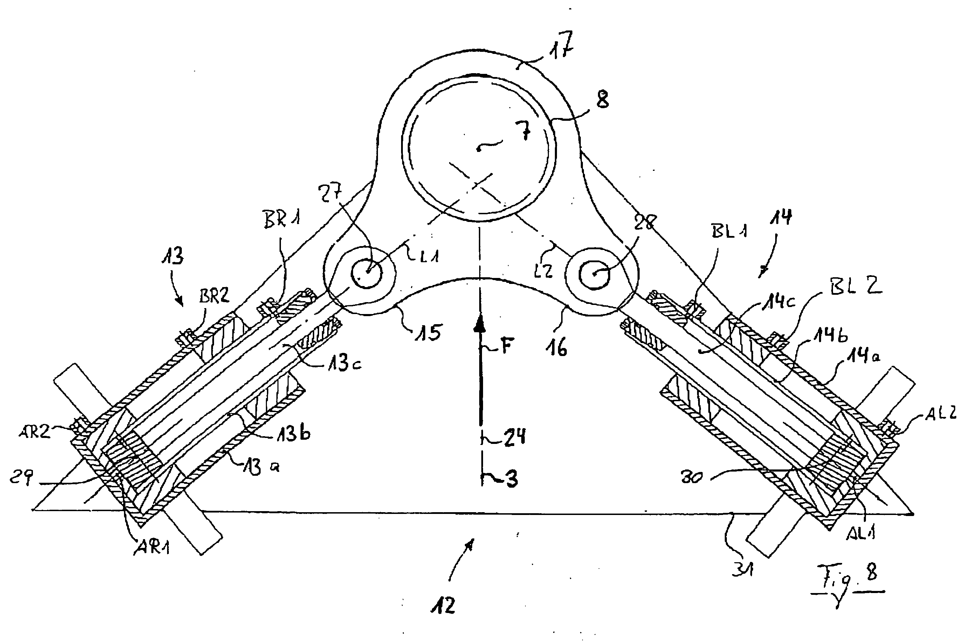

Die Hydraulikzylinder 13, 14 greifen aus verschiedenen Richtungen an Hebeln 15, 16 an, die der Halterung 8 zugeordnet sind. Im Ausführungsbeispiel sind die Hebel 15, 16 Bestandteil einer gemeinsamen einfachen oder doppelten Platte 17. An dieser greifen die Hydraulikzylinder 13, 14 jeweils über eine parallel zur Schwenkachse 7 stehende Anlenkungsachse 27, 28 mit ihren Kolbenstangen 13c, 14c an. An ihren kolbenbodenscitigen. Enden sind die Zylinder 13, 14 über Halterungsachsen 29, 30, die ebenfalls parallel zur Achse 7 stehen, schwenkbeweglich an einem Träger 31 abgestützt. Die Verbindungslinien der Halterungsachsen. 29, 30 mit der Auslegerachse 7 bilden ein gleichschenkliges Dreieck aus (Fig. 8). In dieser Stellung des Auslegers 3 führt eine die Halterungsachse 29 eines Hydraulikzylinders 13 und die Anlenkungsachse 27 schneidende Wirklinie L1 fahrzeugseitig an der Achse 7 vorbei. Gleiches gilt für eine die Halterungsachse 30 des Hydraulikzylinders 14 und seine Anlenkungsachse 28 schneidende Wirklinie L2. Dadurch stellt diese Stellung keine Totpunktlage dar. Jede Bewegung eines Hydraulikzylinders 13, 14 führt zu einem Drehmoment um die Achse 7.

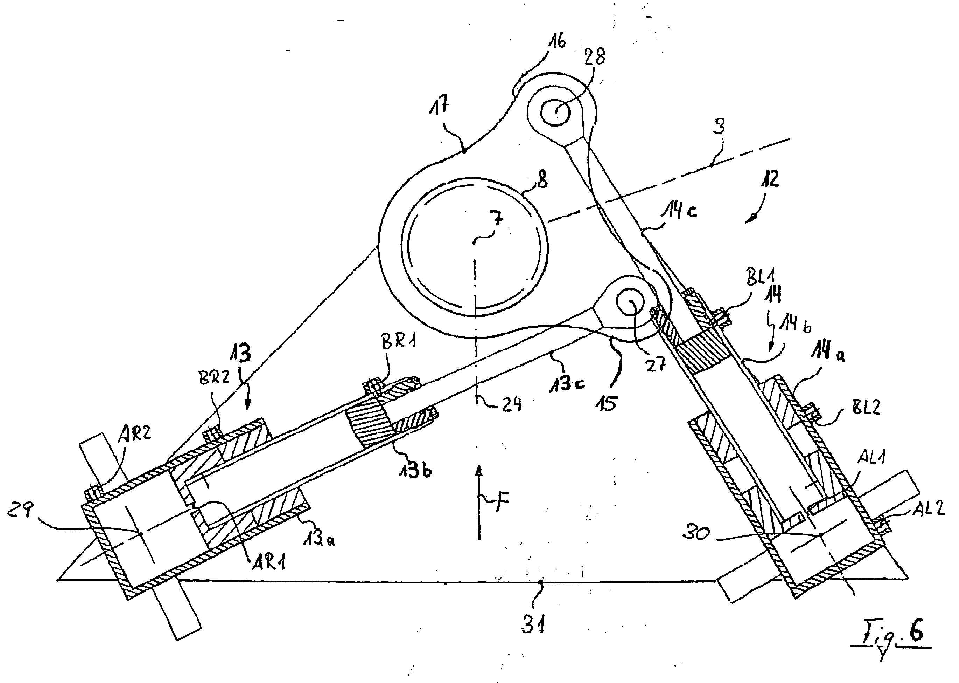

Im Ausführungsbeispiel ist die Bewegungsmöglichkeit des Auslegers 3 um die Achse 7 nach rechts und links vollständig symmetrisch, um so ohne Umbau sowohl ein Bearbeiten des rechten wie auch des linken Straßenrandes zu ermöglichen. Die nach hinten weisende Stellung des Auslegers 3 bildet hierbei eine dynamische oder statische Nullstellung aus. Aus dieser heraus ist der Ausleger zu beiden Seiten um mindestens 90° um die Achse 7 schwenkbar. Dann befindet er sich bei Schwenken zur rechten Fahrzeugseite beispielsweise in der quer ausgreifenden Stellung nach Fig. 1 oder der Quertransportstellung nach Fig. 2. Vorteilhaft kann der Ausleger 3 noch um mindestens 20° weiter nach vorne verschwenkt werden, gegenüber der Nullage also um mindestens 110°, wodurch er dann in die in Fig. 6 angedeutete und leicht vor das vordere Fahrzeugende greifende Stellung kommt.

Alle Schwenkstellungen sind allein durch entsprechende Beaufschlagung der Hydraulikzylinder 13, 14 zu erreichen, deren Endstellungen begrenzen den Schwenkwinkel. Somit sind sonstige äußere Anschläge zur Begrenzung des Schwenkwinkels vollständig entbehrlich.

Wie in den Figuren 6 bis 8 deutlich wird, besteht jeder Hydraulikzylinder 13, 14 aus zwei ineinander geschachtelten Zylindern; es müssen dennoch nur drei äußere Anschlüsse vorgesehen sein:

Das an den Halterungsachsen 29, 30 schwenkbeweglich am Träger 31 gehaltene äußere Kolbengehäuse 13a bzw. 14a ist kolbenbodenseitig mit einem Druckmittelanschluß AR2 bzw. AL2 versehen. Zur kolbenstangenseitigen Druckmittelbeaufschlagung des äußeren Zylinders dient der Anschluß BR2 bzw. BL2.

Die in dem Kolbengehäuse 13a, 14a des äußeren Zylinders hubbewegliche Kolbenstange 13b bzw. 14b bildet gleichzeitig das Kolbengehäuse für eine innere Kolbenstange 13e bzw. 14c, die dann an den Anlenkachsen 27, 28 der Hebel 15, 16 der Platte 17 angreifen kann.

Zur Druckmittelbeaufschlagung nur des inneren Zylinders dient kolbenstangenseitig der Anschluß BR1 bzw. BL1.

Zur kolbenbodenseitigen Druckmittelbeaufschlagung des inneren Zylinders dient der Durchgangskanal AR1 bzw. AL1, der den Kolbenboden des inneren Zylinders mit dem des äußeren Zylinders verbindet. Diese Verbindung ist nicht zwingend, jedoch vereinfachend. Auch ein weiterer äußerer Anschluß könnte alternativ vorgesehen sein.

In der Nullstellung nach Fig. 8 sind die kolbenstangenseitigen Anschlüsse BR1 und BR2 des in Fahrtrichtung linken Zylinders 13 sowie die kolbenstangenseitigen Anschlüsse BL1 und BL2 des in Fahrtrichtung F rechten Zylinders 14 mit Druckmittel beaufschlagt, so daß sowohl die Kolbenstangen 13c, 14c der inneren Zylinder als auch die Kolbenstangen 13b, 14b der äußeren Zylinder eingefahren sind. Die Kolbenbodenanschlüsse AR2, AL2 sind mit dem Rücklauf verbunden.

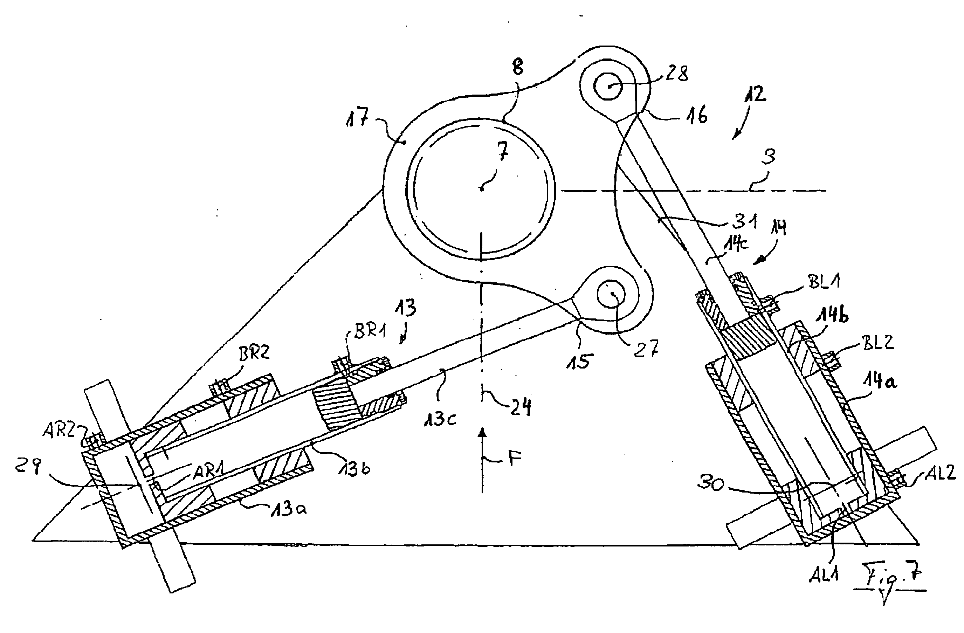

Um aus dieser Stellung heraus eine Auslenkung z. B. nach rechts zu bewirken (Übergang von Fig. 8 zu Fig. 7), wird der linke Zylinder 13 am Anschluß AR2, also kolbenbodenseitig, mit Druckmittel beaufschlagt. Gleichzeitig gelangt auch Druckmittel durch den Kanal AR1 in den inneren Zylinder, so daß dieser wegen des kleineren Widerstands zunächst vollständig ausfährt und anschließend der äußere Zylinder teilweise mit ausfährt. Die Anschlüsse BR1 und BR2 sind hierfür an den Rücklauf angeschlossen. Am rechten Zylinder 14 ist jedoch nur der kolbenstangenseitige Anschluß BL1 des inneren Zylinders an den Rücklauf angeschlossen, die Kolbenstange 14c dieses inneren Zylinders kann daher ausfahren, nicht jedoch die Kolbenstange 22b des äußeren Zylinders, da der Anschluß BL2 nicht freigcschaltet ist. Daher kann auch die äußere Kolbenstange 13b des linken Zylinders 13 nicht vollständig ausfahren, sondern lediglich die innere Kolbenstange 13c. Somit ergibt sich aus der Nullage heraus stets eine eindeutige Bewegungsrichtung.

Um aus der quer ausgelenkten Stellung nach Fig. 7 heraus den Ausleger 3 noch weiter nach vorne schwenken zu können (Fig. 6) und somit aus der Nullstellung heraus einen Schwenkwinkel des Auslegers von 110° oder 115° zu erreichen (Übergang von Fig. 7 zu Fig. 6), ist es erforderlich, daß die äußere Kolbenstange 13b des linken Zylinders 13 vollständig ausfährt. Hierzu wird durch Umschalten eines Ventils auch der kolbenstangenseitige Anschluß BL2 des äußeren rechten Zylinders 14 mit dem Rücklauf verbunden. Da ansonsten die Schaltung unverändert bleibt, kann nun die weitere Druckmittelbeaufschlagung des Anschlusses AR2 nicht mehr nur dazu führen, daß die innere Kolbenstange 13c vollständig ausfährt, sondern jetzt kann auch die äußere Kolbenstange 13b vollständig ausfahren, da der Gegendruck durch die Freischaltung des Anschlusses BL2 aufgehoben ist.

Dies stellt eine Extremstellung des linken Zylinders 13 dar, wohingegen beim rechten 14 die äußere Kolbenstange 14b nicht vollständig ausgefahren ist (Fig. 6). Die Antriebseinheit 12 ist somit selbständig in ihrer Maximalauslenkung begrenzt. Daher sind auch mechanische Anschläge nicht erforderlich. Auch eine Kollision der Hydraulikzylinder 13, 14 ist daher zwangsweise vermieden. Ein Schwenken zur anderen Seite ist bei umgekehrter Beaufschlagung gleichwertig vornehmbar.

Es tritt in der gesamten Bewegung kein einziger Schwenkwinkel auf, bei dem beide Kraftwirklinien - zwischen Halterungsachse 29 und Anlenkungsachse 27 (bzw. 30 und 28) die Achse 7 schneiden würden. Es muß daher erstmals auch beim Übergang vom rechten zum linken Ausschwenken keine Totpunktlage überwunden werden, was besonders vorteilhaft für einen flüssigen und schnellen Bewegungsablauf ist.

Die Kraftwirklinie 29-27 des hier beim Übergang von Fig. 8 zu Fig. 6 durch Druck treibenden Zylinders 13 bleibt während dieser gesamten Bewegung fahrzeugseitig der Achse 7 und schneidet diese nicht. Ein Durchgang durch die Achse findet lediglich bei der Wirklinie des hier passiv mitgenommenen Zylinders 14 statt und ist daher unschädlich für die hohe Effektivität der Kraftübertragung.

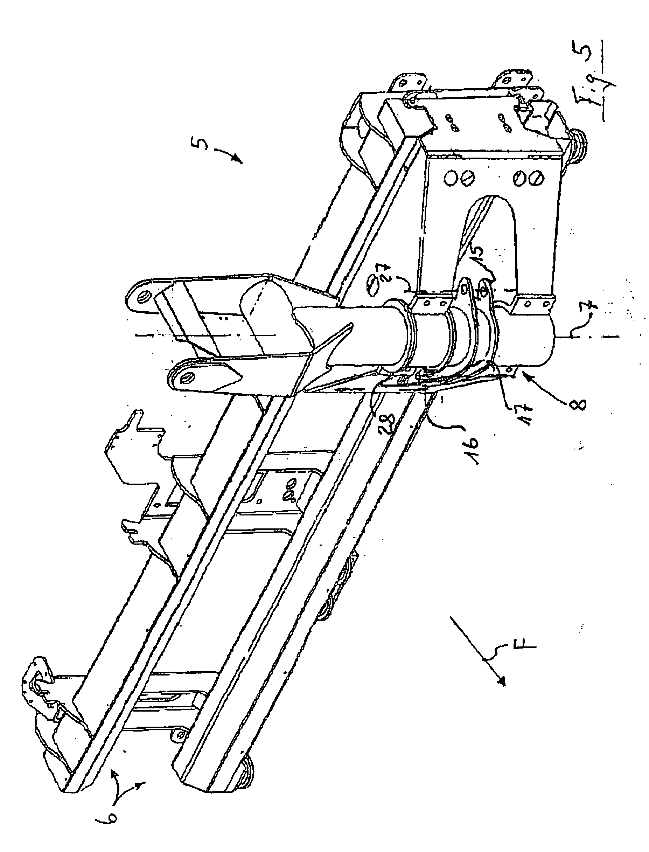

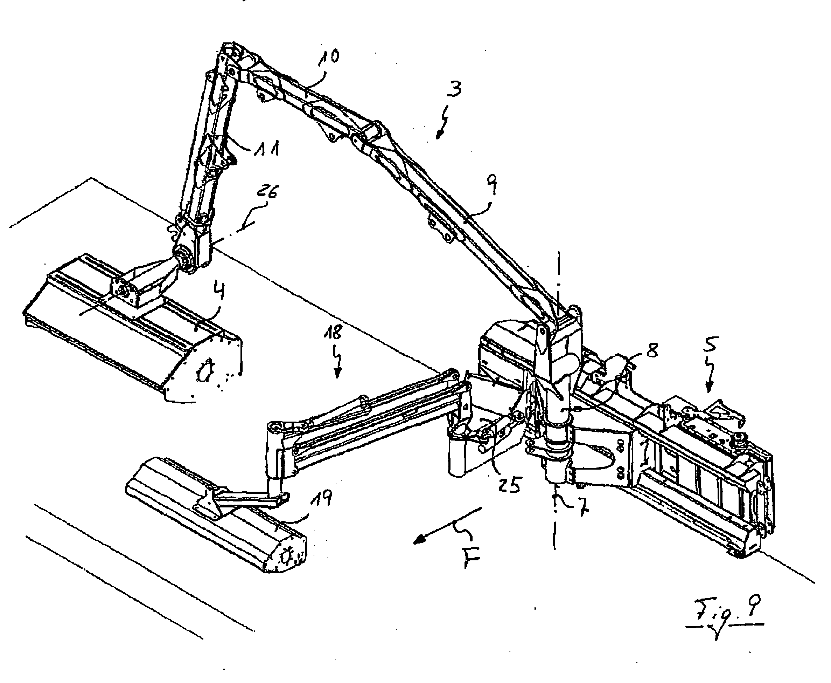

In den Figuren 9 bis 13 ist dargestellt, daß bei gegenüber den Figuren 1 bis 8 unverändertem Ausleger 3 zusätzlich ein zweiter, ebenfalls quer verschieblicher Ausleger 18 mit einem oder mehreren weiteren Arbeitsköpfen 19, beispielsweise Mähköpfen, montierbar ist.

Dennoch kann der erste Ausleger 3 hiervon unbeeinflußt wiederum in beiden Transportstellungen, also sowohl quer vor dem Fahrzeug als auch längs nach hinten greifen, ablegbar bleiben.

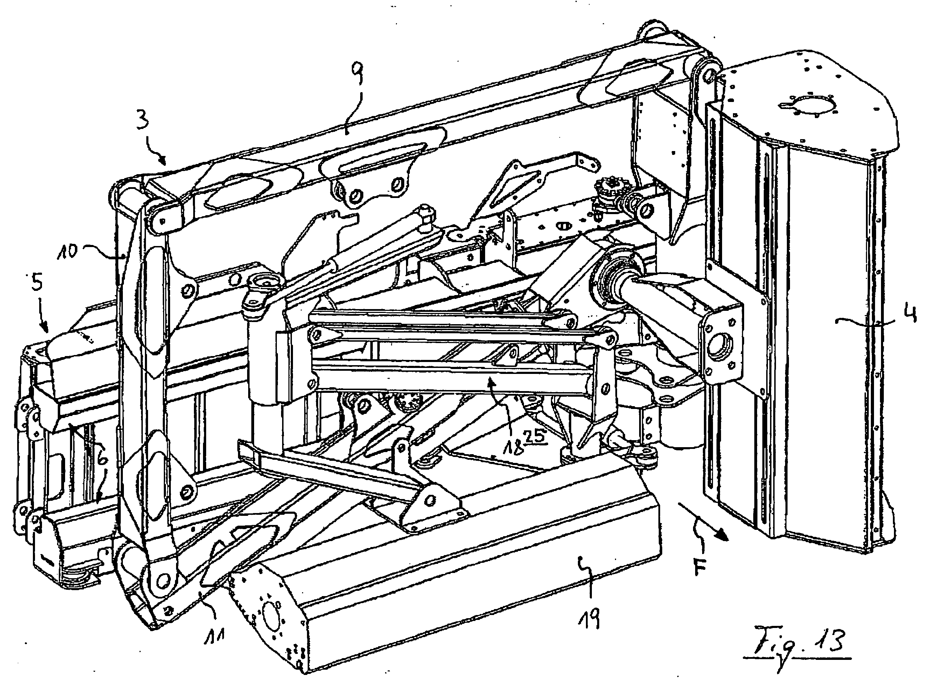

Daß auch die quer vor dem Fahrzeug liegende Transportstellung des ersten Auslegers 3 erhalten bleibt, ist in den Figuren 11 bis 13 erkennbar: Der erste Ausleger steht mit seiner Halterung 8 bezüglich der Fahrtrichtung F ganz links. Der zweite Ausleger 18 ist dabei an der Querführungseinrichtung 6 in etwa mittig verlagert und von dem mit um die Achse 26 vertikal gestelltem Mähkopf 4 und ansonsten genau wie in Fig. 2 abgelegten ersten Ausleger übergriffen. Hierfür umfaßt der zweite Ausleger 18 einen von der Querführungseinrichtung 6 nach vorne in Fahrtrichtung F ausgreifenden niedrigen Sockel 25, über den der dritte Abschnitt 11 des Auslegers 3 greifen kann (Fig. 13), so daß beide Ausleger 3, 18 ineinander verschachtelt liegen können. Je nach Ausbildung kann dieser Sockel 25 auch eine zumindest teilweise abstützende Ablage für einen Teil 11 des nach hinten ablegbaren Auslegers 3 bilden.

Eine An- oder Demontage des zweiten Auslegers 18 ist dabei problemlos möglich, so daß sich eine hohe Flexibilität ergibt.

Auch kann zum Beispiel für eine langsame Fahrt der erste Ausleger 3 in Quertransportstellung stehen und für eine schnellere Fahrt oder für einen anderen Arbeitseinsatz unbeeinflußt vom zweiten Ausleger 18 in Längstransportstellung nach hinten weisen.

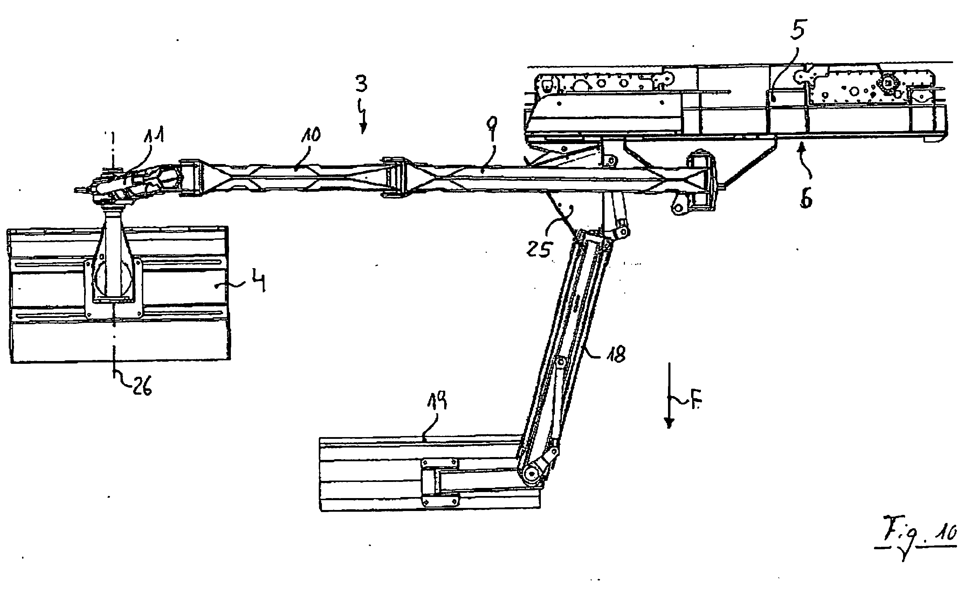

In Arbeitsstellung (Fig. 9, Fig. 10) beider Arbeitsköpfe 4, 19 können diese seitlich versetzt zueinander arbeiten, zum Beispiel zwei Streifen vor und hinter einer Leitplanke oder dergl. mähen, Der Sockel 25 und die Halterung 18 können dabei sowohl weitestgehend bezüglich der Fahrtrichtung nach rechts (Fig. 9, Fig. 10) als auch beispielsweise für einen Linksbetrieb zur anderen Seite verlagert sein.

### Bezugszeichenliste:

- 1: Mäh- und oder Schneidgerät,
- 2: Fahrzeug,
- 3: Ausleger,
- 4: Arbeitskopf,
- 5: Träger,
- 6: Querführungseinrichtung,
- 7: Schwenkachse,
- 8: Halterung,
- 9: erster Abschnitt,
- 10: zweiter Abschnitt,
- 11: dritter Abschnitt des Auslegers,
- 12: Antriebseinheit,
- 13: linker Hydraulikzylinder,
- 14: rechter Hydraulikzylinder,
- 15: Hebel,
- 16: Hebel,
- 17: Platte,
- 18: zweiter Au sleger,
- 19: zweiter Arbeitskopf
- 20: Hindernis,
- 21: Führerhaus,
- 22: Ladefläche,
- 23: Ablage,
- 24: Längsebene,
- 25: Sockel,
- 26: Achse
- 27: Anlenkungsachse,
- 28: Anlenlsungsachse,
- 29: Halterungsachse,
- 30: Halterungsachse,
- 31: Träger

## Patentansprüche

1. Mäh- und/oder Schneidgerät (1) mit zumindest einem an Fahrzeug (2) beweglich gehaltenen Ausleger (3;18), der in einer Arbeitsstellung auswärts erstreckbar ist und zumindest einen Arbeitskopf (4;19) trägt,
**dadurch gekennzeichnet,**
**daß** ein Ausleger (3) wahlweise zumindest in einer ersten Transportstellung quer vor dem Fahrzeug (2) oder in einer zweiten Transportstellung längs nach hinten hinter ein Führerhaus (21) des Fahrzeugs (2) greifend ablegbar ist.

2. Mäh- und/oder Schneidgerät nach Anspruch 1,
**dadurch gekennzeichnet,**
**daß** der nach hinten ablegbare Ausleger (3) an einer frontseitigen Trägereinrichtung (5) quer zum Fahrzeug (2) beweglich gehalten und für eine nach hinten greifende Stellung daran gegenüber einer vertikalen Fahrzeuglängsmittelebene seitlich versetzt halterbar ist.

3. Mäh- und/oder Schneidgerät nach einem der Ansprüche 1 oder 2,
**dadurch gekennzeichnet,**
**daß** der nach hinten ablegbare Ausleger (3) aus der parallel zur Fahrzeuglängsrichtung nach hinten greifenden Stellung heraus in gleichartiger Weise zu beiden Seiten hin nach vorne schwenkbar ist.

4. Mäh- und/oder Schneidgerät nach einem der Ansprüche 1 bis 3,
**dadurch gekennzeichnet,**
**daß** für die Bewirkung der beiden Schwenkbewegungen des Auslegers (3) in einer zumindest nahezu senkrecht zur vertikalen Schwenkachse (7) des Auslegers (3) liegenden Ebene eine Antriebseinheit (12) vorgesehen ist, durch die der Ausleger (3) aus zwei oder mehr unterschiedlichen Richtungen (29-27;30-28) mit Kraft beaufschlagbar ist.

5. Mäh- und/oder Schneidgerät nach Anspruch 4,
**dadurch gekennzeichnet,**
**daß** die Antriebseinheit (12) eine hydraulische Antriebseinheit mit zumindest zwei auf den Ausleger (3) einwirkbaren Hydraulikzylindern (13;14) ist.

6. Mäh- und/oder Schneidgerät (1) nach einem der Ansprüche 1 bis 5,
**dadurch gekennzeichnet,**
**daß** der Bewegungswinkel des Auslegers (3) aus der unbeaufschlagten Stellung zu jeder Seite mindestens 110° beträgt.

7. Mäh- und/oder Schneidgerät nach einem der Ansprüche 1 bis 6,
**dadurch gekennzeichnet,**
**daß** die Krafteinwirkungsrichtungen (29-27;30-28) zumindest in einer Nullstellung symmetrisch zu einer die vertikale Schwenkachse (7) des Auslegers (3) schneidenden Fahrzeuglängsebene (24) angeordnet sind.

8. Mäh- und/oder Schneidgerät nach einem der Ansprüche 1 bis 7,
**dadurch gekennzeichnet,**
**daß** die Schwenkbewegung um die vertikale Achse (7) frei von äußeren Anschlägen ausführbar ist.

9. Mäh- und/oder Schneidgerät nach einem der Ansprüche 1 bis 8,
**dadurch gekennzeichnet,**
**daß** in der heckwärts weisenden Längsstellung des Auslegers (3) die Wirklinie entlang der Längsachse zumindest eines Hydraulikzylinders (13;14) fahrzeugseitig an der Auslegerachse (7) vorbeiläuft.

10. Mäh- und/oder Schneidgerät nach einem der Ansprüche 1 bis 9,
**dadurch gekennzeichnet,**
**daß** zur Schwenkbewegung des Auslegers (3) zumindest ein Hydraulikzylinder (13;14) vorgesehen ist, der einen äußeren Zylinder (13a,13b;14a,14b) umfaßt, dessen Kolbenstange (13b;14b) nach Art eines Teleskops einen inneren Zylinder (13b,13c;14b,14c) mit einer ausfahrbaren inneren Kolbenstange (13c;14c) ausbildet.

11. Mäh- und/oder Schneidgerät nach einem der Ansprüche 1 bis 10,
**dadurch gekennzeichnet,**
**daß** der nach hinten ablegbare Ausleger (3), zumindest einen ersten auf- und abwärts beweglichen, in einer Arbeitsstellung hoch aufragbaren Abschnitt (9), einen daran anschließende quer ausgreifbaren zweiten Abschnitt (10) und zumindest einen dritten, abwärts in Richtung Arbeitskopf (4) erstreckbaren Abschnitt (11) umfaßt.

12. Mäh- und/oder Schneidgerät nach Anspruch 11,
**dadurch gekennzeichnet,**
**daß** dieser Ausleger (3) in einer Quertransportstellung quer vor oder hinter dem Fahrzeug (2) derart halterbar ist, daß der erste Abschnitt (9) quer zum Fahrzeug (2), der zweite Abschnitt (10) zumindest nahezu vertikal abwärts und der dritte Abschnitt (11) schräg aufwärts oder nahezu horizontal mit einer dem ersten Abschnitt (9) entgegengesetzten Querkomponente verläuft.

13. Mäh- und/oder Schneidgerät nach einem der Ansprüche 11 oder 12,
**dadurch gekennzeichnet,**
**daß** in einer Längstransportstellung dieses Auslegers (3) bei frontseitigem Anbau der erste Abschnitt (9) so weit aufgestellt ist, daß seine Anlenkung zum zweiten Abschnitt (10) das Führerhaus (21) überragt, der zweite Abschnitt (10) oberhalb des Führerhauses (21) gelegen ist und der dritte Abschnitt (11) sich abwärts in Richtung einer Ladefläche (22) erstreckt.

14. Mäh- und/oder Schneidgerät nach Anspruch 13,
**dadurch gekennzeichnet,**
**daß** in der Längstransportstellung eine Länge- und/oder Winkeleinstellung des dritten Abschnitts (11) an die Geometrie der jeweiligen Ladefläche (22) anpaßbar ist.

15. Mäh- und/oder Schneidgerät nach einem der Ansprüche 11 bis 14,
**dadurch gekennzeichnet,**
**daß** an dem Fahrzeug (2) ein zweiter Ausleger (18) mit zumindest einem weiteren Arbeitskopf (19) gehalten ist.

16. Mäh- und/oder Schneidgerät nach einem der Ansprüche 11 bis 14,
**dadurch gekennzeichnet,**
**daß** der zweite Ausleger (18) in seiner Transportstellung zumindest bereichsweise (25) von dem ersten Ausleger (3) in seiner quer abgelegten Transportstellung übergreifbar ist.

## Claims

1. A mowing and/or cutting apparatus (1) with at least one boom arm (3; 18) held movably on [a] vehicle (2), which boom arm can be extended outwards into a working position and bears at least one working head (4; 19), **characterised in that** a boom arm (3) can be stowed selectively at least in a first transport position transversely in front of the vehicle (2) or in a second transport position reaching longitudinally to the rear behind a driver's cab (21) of the vehicle (2).

2. A mowing and/or cutting apparatus according to Claim 1, **characterised in that** the boom arm (3) which can be stowed to the rear is held movably transversely to the vehicle (2) on a front-end carrier means (5) and for a position reaching towards the rear can be mounted laterally offset thereon with respect to a vertical longitudinal centre plane of the vehicle.

3. A mowing and/or cutting apparatus according to one of Claims 1 or 2, **characterised in that** the boom arm (3) which can be stowed to the rear can be pivoted forwards out of the position reaching towards the rear parallel to the longitudinal direction of the vehicle in a similar manner towards both sides.

4. A mowing and/or cutting apparatus according to one of Claims 1 to 3, **characterised in that** a drive unit (12) is provided for effecting the two pivoting movements of the boom arm (3) in a plane lying at least virtually at right-angles to the vertical pivot axis (7) of the boom arm (3), by means of which unit the boom arm (3) can be acted upon by force from two or more different directions (29-27; 30-28).

5. A mowing and/or cutting apparatus according to Claim 4, **characterised in that** the drive unit (12) is a hydraulic drive unit with at least two hydraulic cylinders (13; 14) which can act on the boom arm (3).

6. A mowing and/or cutting apparatus (1) according to one of Claims 1 to 5, **characterised in that** the angle of movement of the boom arm (3) out of the position which is not acted upon to either side is at least 110°.

7. A mowing and/or cutting apparatus according to one of Claims 1 to 6, **characterised in that** the directions of introduction of force (29-27; 30-28) at least in a zero position are arranged symmetrically to a longitudinal vehicle plane (24) intersecting the vertical pivot axis (7) of the boom arm (3).

8. A mowing and/or cutting apparatus according to one of Claims 1 to 7, **characterised in that** the pivoting movement about the vertical axis (7) can be carried out free from external stops.

9. A mowing and/or cutting apparatus according to one of Claims 1 to 8, **characterised in that** in the rearward-pointing longitudinal position of the boom arm (3) the line of action along the longitudinal axis of at least one hydraulic cylinder (13; 14) passes the boom arm axis (7) on the vehicle side.

10. A mowing and/or cutting apparatus according to one of Claims 1 to 9, **characterised in that** at least one hydraulic cylinder (13; 14) is provided for the pivoting movement of the boom arm (3), which cylinder comprises an outer cylinder (13a, 13b; 14a, 14b), the piston rod (13b; 14b) of which, in the manner of a telescope, forms an inner cylinder (13b, 13c; 14b, 14c) with an extendable inner piston rod (13c; 14c).

11. A mowing and/or cutting apparatus according to one of Claims 1 to 10, **characterised in that** the boom arm (3) which can be stowed to the rear comprises at least a first section (9) which is movable upwards and downwards and which can be raised up into a working position, a second section (10) adjoining it which can be extended transversely and at least a third section (11) which can be extended downwards in the direction of the working head (4).

12. A mowing and/or cutting apparatus according to Claim 11, **characterised in that** this boom arm (3) can be mounted in a transverse transport position transversely in front of or behind the vehicle (2) such that the first section (9) runs transversely to the vehicle (2), the second section (10) runs at least virtually vertically downwards and the third section (11) runs obliquely upwards or virtually horizontally with a transverse component opposed to the first section (9).

13. A mowing and/or cutting apparatus according to one of Claims 11 or 12, **characterised in that** in a longitudinal transport position of this boom arm (3), when attached to the front end, the first section (9) is erected to such a height that its articulation to the second section (10) projects above the driver's cab (21), the second section (10) is located above the driver's cab (21) and the third section (11) extends downwards in the direction of a loading surface (22).

14. A mowing and/or cutting apparatus according to Claim 13, **characterised in that** in the longitudinal transport position an adjustment of length and/or angle of the third section (11) can be adapted to the geometry of the respective loading surface (22).

15. A mowing and/or cutting apparatus according to one of Claims 11 to 14, **characterised in that** a second boom arm (18) with at least one further working head (19) is held on the vehicle (2).

16. A mowing and/or cutting apparatus according to one of Claims 11 to 14, **characterised in that** the second boom arm (18) in its transport position can, at least in regions (25), be overlapped by the first boom arm (3) in its transversely stowed transport position.

## Revendications

1. Appareil (1) de fauchage et/ou de coupe, comprenant au moins un bras (3; 18) maintenu de façon mobile sur un véhicule (2), qui peut être étendu vers l'extérieur dans une position de travail, et porte au moins une tête de travail (4; 19),
**caractérisé en ce que**
un bras (3) peut être déposé, au choix, dans au moins une première position de transport, transversalement devant le véhicule (2), ou dans une deuxième position de transport, longitudinalement vers l'arrière, en s'engageant derrière une cabine (21) du véhicule (2).

2. Appareil de fauchage et/ou de coupe selon la revendication 1,
**caractérisé en ce que**
le bras (3) pouvant être déposé vers l'arrière est maintenu sur un dispositif de support frontal (5) de façon transversalement mobile par rapport au véhicule (2), et peut y être maintenu de façon latéralement décalée par rapport à un plan longitudinal médian de véhicule vertical, en vue d'adopter une position orientée vers l'arrière.

3. Appareil de fauchage et/ou de coupe selon l'une des revendications 1 ou 2,
**caractérisé en ce que**
le bras (3), qui peut être déposé vers l'arrière, peut être retourné vers l'avant, depuis la position d'engagement vers l'arrière, parallèlement au sens longitudinal du véhicule, en pouvant être déplacé de la même manière vers les deux côtés.

4. Appareil de fauchage et/ou de coupe selon l'une des revendications 1 à 3,
**caractérisé en ce que**
pour effectuer les deux mouvements de pivotement du bras (3) dans un plan au moins à peu près perpendiculaire à l'axe de pivotement vertical (7) du bras (3), une unité d'entraînement (12) est prévue, au moyen de laquelle des forces peuvent être appliquées au bras (3) dans deux ou plusieurs directions (29-27 ; 30-28) différentes.

5. Appareil de fauchage et/ou de coupe selon la revendication 4,
**caractérisé en ce que**
l'unité d'entraînement (12) est une unité d'entraînement hydraulique ayant au moins deux vérins hydrauliques (13 ; 14) agissant sur le bras (3).

6. Appareil de fauchage et/ou de coupe selon l'une des revendications 1 à 5,
**caractérisé en ce que**
l'angle de mouvement du bras (3), depuis la position neutre, est d'au moins 110° des deux côtés.

7. Appareil de fauchage et/ou de coupe selon l'une des revendications 1 à 6,
**caractérisé en ce que**
dans une position zéro au moins, les directions d'application de forces (29 à 27 ; 30 à 28) sont disposés de façon symétrique par rapport à un plan longitudinal (24) du véhicule, qui coupe l'axe de pivotement vertical (7) du bras (3).

8. Appareil de fauchage et/ou de coupe selon l'une des revendications 1 à 7,
**caractérisé en ce que**
le mouvement de pivotement autour de l'axe vertical (7) peut être effectué de façon libre de toute butée extérieure.

9. Appareil de fauchage et/ou de coupe selon l'une des revendications 1 à 8,
**caractérisé en ce que**
dans la position d'orientation longitudinale dirigée vers l'arrière du bras (3), la ligne d'action suivant l'axe longitudinal de l'un au moins des vérins hydrauliques (13 ; 14) passe à côté de l'axe (7) du bras, du côté du véhicule.

10. Appareil de fauchage et/ou de coupe selon l'une des revendications 1 à 9,
**caractérisé en ce que**
pour effectuer le mouvement de pivotement du bras (3), au moins un vérin hydraulique (13 ; 14) est prévu, qui comprend un cylindre extérieur (13a, 13b ; 14a, 14b), dont la tige de piston (13b ; 14b) forme un cylindre intérieur (13b, 13c ; 14b, 14c) comprenant une tige de piston intérieure coulissante (13c ; 14c), à la manière d'un télescope.

11. Appareil de fauchage et/ou de coupe selon l'une des revendications 1 à 10,
**caractérisé en ce que**
le bras (3) pouvant être déposé vers l'arrière comprend au moins une première section (9) mobile en montée et descente, se dressant vers le haut dans une position de travail, une deuxième section (10) rejoignant la première, pouvant être déployée transversalement, et au moins une troisième section (11) pouvant être déployée vers le bas, en direction de la tête de travail (4).

12. Appareil de fauchage et/ou de coupe selon la revendication 11,
**caractérisé en ce que**
dans une position de transport transversale, ce bras (3) peut être maintenu transversalement devant ou derrière le véhicule (2) d'une manière telle que la première section (9) s'étende transversalement au véhicule (2), la deuxième section (10) s'étende au moins presque verticalement vers le bas, et la troisième section (11) s'étende obliquement vers le haut, ou de façon presque horizontale, avec une composante transversale opposée à la première section (9).

13. Appareil de fauchage et/ou de coupe selon l'une des revendications 11 ou 12
**caractérisé en ce que**
dans une position de transport longitudinale de ce bras (3), lorsque celui-ci est monté à l'avant, la première section (9) est dressée vers le haut à un point tel que son articulation avec la deuxième section (10) surmonte la cabine (21), que la deuxième section (10) soit située au-dessus de la cabine (21), et que la troisième section (11) s'étende vers le bas en direction d'une surface de chargement (22).

14. Appareil de fauchage et/ou de coupe selon la revendication 13,
**caractérisé en ce que**
dans la position de transport longitudinale, une position longitudinale et/ou une position angulaire de la troisième section (11) peut être adaptée à la géométrie de la surface de chargement correspondante (22).

15. Appareil de fauchage et/ou de coupe selon l'une des revendications 11 à 14,
**caractérisé en ce que**
un deuxième bras (18) muni d'au moins une autre tête de travail (19) est maintenu sur le véhicule (2).

16. Appareil de fauchage et/ou de coupe selon l'une des revendications 11 à 14,
**caractérisé en ce que**
dans sa position de transport, le deuxième bras (18) peut être recouvert, par secteurs (25) au moins, par le premier bras (3), dans la position de transport à rangement transversal de celui-ci.
